# EUROPEAN PATENT APPLICATION

(11) **EP 2 498 214 A1**
(43) Date of publication of application: **12.09.2012**
(21) Application number: 10828280.7
(22) Date of filing: 02.11.2010
(51) Int. Cl.: G06Q 50/00, G06Q 10/00

(54) **DISASTER INFORMATION PROVISION SYSTEM AND DISASTER INFORMATION PROVISION METHOD**

(30) Priority: 04.11.2009 JP 2009252943
(71) Applicant: NTT DoCoMo, Inc., Chiyoda-Ku Tokyo 100-6150 (JP)
(72) Inventor: NAGATA Tomohiro, Tokyo 100-6150 (JP); OKAJIMA Ichiro, Tokyo 100-6150 (JP); YAMASHITA Masashi, Tokyo 100-6150 (JP); OYABU Yuki, Tokyo 100-6150 (JP)
(74) Representative: Viering, Jentschura & Partner
(86) International application number: PCT/JP2010/069490
(87) International publication number: WO 2011/055720

(57) **Abstract**

An association unit 15 associates earthquake disaster information that a governmental agency, a municipality, or the like publishes with base station data including position information of base stations. A base station priority calculation unit 16, based on an association result by the association unit 15 and the estimated number of users that are present in coverage of each of the base stations, assigns priority for recovery measures at the time of an earthquake disaster to the base stations, and causes a display unit 30 to display the priority of the base stations thus calculated. Thus, it becomes possible to easily assign the priority of the base stations based on the earthquake disaster information that a governmental agency, a municipality, or the like publishes.

## Description

### Technical Field

The present invention relates to a disaster information provision system and a disaster information provision method for providing information upon the occurrence of a disaster.

### Background Art

Conventionally, by combining population distribution obtained from a census with earthquake disaster data (e.g., predicted seismic intensity distribution upon the occurrence of an earthquake) that a governmental agency, a municipality, or the like publishes, information on the number of victims upon the occurrence of a disaster or in a stage of prediction performed before the occurrence thereof is obtained. In addition, in Patent Literature 1, a structure of transmitting disaster damage information from a mobile device to a disaster monitor via communication network for a mobile device, for example, is described. It is considered that, based on the disaster damage information thus obtained, various information upon the occurrence of a disaster is obtained, or is predicted before the occurrence thereof.

### Citation List

### Patent Literature

[Patent Literature 1] Domestic Re-publication of PCT International Application No. 004076/2005

### Summary of Invention

### Technical Problem

However, in population distribution obtained from a census, population that varies with time of day, for example, is not considered, and thus it is not possible to accurately obtain or predict various information upon the occurrence of a disaster. In addition, with a structure for collecting disaster damage information from mobile devices, there is an occasion when it is impossible to acquire disaster damage information, such as an occasion when no mobile devices exist in an area disaster damage information for which is desired, or an occasion when a problem occurs at a base station because of a disaster and communication becomes impossible, and accordingly it is impossible to accurately obtain various information upon the occurrence of the disaster. In addition, because of the structure making it possible to acquire disaster damage information from a mobile device only when a disaster actually occurs, under a condition in which no disaster occurs, a problem arises in that it is impossible to obtain various information upon the occurrence of a disaster.

Accordingly, the present invention, in view of the above problem to be solved, aims to provide a disaster information provision system and a disaster information provision method capable of obtaining or predicting with higher accuracy various information upon the occurrence of a disaster or before the occurrence thereof.

### Solution to Problem

To solve the above-mentioned problem, a disaster information provision system of the present invention includes a base station data acquisition unit that acquires base station data including position information of base stations that control communication between mobile devices; a disaster information acquisition unit that acquires disaster information; an association unit that associates the base station data acquired by the base station data acquisition unit with the disaster information acquired by the disaster information acquisition unit; a user count estimation unit that estimates the number of users of the mobile devices that the base stations control; a base station priority calculation unit that, based on an association result by the association unit and the number of the users, calculates priority of the base stations in accordance with a predetermined condition specified in advance; and an output unit that outputs the priority calculated by the base station priority calculation unit.

Furthermore, a disaster information provision method executed by a disaster information provision system of the present invention includes a base station data acquisition step of acquiring base station data including position information of base stations that control communication between mobile devices; a disaster information acquisition step of acquiring disaster information; an association step of associating the base station data acquired at the base station data acquisition step with the disaster information acquired at the disaster information acquisition step; a user count estimation step of estimating the number of users of the mobile devices that the base stations control; a base station priority calculation step of, based on an association result at the association step and the number of the users, calculating priority of the base stations in accordance with a predetermined condition specified in advance; and an output step of outputting the priority calculated at the base station priority calculation step.

According to the present invention, for example, association of disaster information that a governmental agency, a municipality, or the like publishes with position information of base stations is performed. Based on the association result and the estimated number of users, it is possible to assign priority of base stations for recovery measures at the time of a disaster. In this manner, based on the disaster information published, it is possible to accurately and easily assign priority of base stations and provide the priority.

Furthermore, the base station data is preferred to include, in addition to the position information, at least one of classification information of the base stations and earthquake resistance information of the base stations. Accordingly, it becomes possible to, based on at least one of the classification information of the base stations and the earthquake resistance information of the base stations, calculate priority of base stations with higher accuracy.

Furthermore, a disaster information provision system of the present invention includes a disaster information acquisition unit that acquires disaster information indicating a disaster situation for each of predetermined areas; a user count estimation unit that estimates the number of users of mobile devices that base stations controlling communication between the mobile devices control at predetermined time intervals; a population calculation unit that calculates population for each of the predetermined areas from the estimated number of users that the user count estimation unit estimates; an association unit that associates the population that the population calculation unit calculates with the disaster information acquired by the disaster information acquisition unit; a disaster-situation-specific population calculation unit that, based on an association result by the association unit, calculates population by disaster situation; and an output unit that outputs the population by disaster situation calculated by the disaster-situation-specific population calculation unit.

Furthermore, a disaster information provision method executed by a disaster information provision system of the present invention includes a disaster information acquisition step of acquiring disaster information that indicates a disaster situation for each of predetermined areas; a user count estimation step of estimating at predetermined time intervals the number of users of mobile devices that base stations controlling communication between the mobile devices control; a population calculation step of calculating population for each of the predetermined areas from the number of the users estimated at the user count estimation step; an association step of associating the population calculated at the population calculation step with the disaster information acquired at the disaster information acquisition step; a disaster-situation-specific population calculation step of, based on an association result at the association step, calculating population by disaster situation; and an output step of outputting the population by disaster situation calculated at the disaster-situation-specific population calculation step.

According to the present invention, population is calculated at predetermined time intervals from the number of mobile devices that base stations control, and association of the population thus calculated with, for example, disaster information that a governmental agency, a municipality, or the like publishes is performed. Based on an association result, it is possible to calculate population by disaster situation (by seismic intensity, for example). In this manner, by using the number of users of mobile devices, it is possible to calculate population in consideration of variation with time of day, and thus provide disaster information with higher accuracy.

Furthermore, the disaster information is preferred to be disaster prediction information on a predicted situation upon the occurrence of a disaster, or disaster damage information that indicates a disaster damage situation upon the actual occurrence of a disaster. Accordingly, it becomes possible to, even under a condition in which no disaster occurs, calculate priority of base stations, and also it becomes possible to, under a condition in which a disaster actually occurs, calculate priority of base stations on the basis of the actual disaster damage information.

### Advantageous Effects of Invention

According to the present invention, it is possible to obtain various information upon the occurrence of a disaster with higher priority.

### Brief Description of Drawings

[Fig. 1] Fig. 1 is a diagram illustrating a system structure of a priority assignment system according to a first embodiment.
[Fig. 2] Fig. 2 is a diagram illustrating details of various data.
[Fig. 3] Fig. 3 is a diagram illustrating a map in which earthquake disaster data and base station data are spatially combined.
[Fig. 4] Fig. 4 is a flowchart illustrating a flow of a priority calculation process.
[Fig. 5] Fig. 5 is a diagram illustrating an example of a display screen.
[Fig. 6] Fig. 6 is a flowchart illustrating details of the priority calculation process.
[Fig.7] Fig. 7 is a diagram illustrating a system structure of a disaster-situation-specific population provision system according to a second embodiment.
[Fig. 8] Fig. 8 is a diagram illustrating details of various data.
[Fig. 9] Fig. 9 is a diagram illustrating detailed data on population.
[Fig. 10] Fig. 10 is a diagram illustrating a graph in which population at each time of day is depicted for each of seismic intensities.
[Fig. 11] Fig. 11 is a diagram illustrating population distribution in an earthquake with a seismic intensity of A.
[Fig. 12] Fig. 12 is a flowchart illustrating a flow of a population calculation process for each of disaster situations.
[Fig. 13] Fig. 13 is a flowchart illustrating a flow of a process for calculating population in each element of a mesh.
[Fig. 14] Fig. 14 is a diagram illustrating a relationship between sectors and the mesh.
[Fig. 15] Fig. 15 is a diagram illustrating a manner of calculating population in an element of the mesh from population in each of the sectors.
[Fig. 16] Fig. 16 is a diagram illustrating a manner of calculating population in the element of the mesh from population in each of the sectors.

### Description of Embodiments

Embodiments of the present invention will be described with reference to the accompanying drawings. When appropriate, like reference signs are given to like parts, and redundant explanations are omitted.

Hereinafter, as embodiments in which a disaster information provision system according to the present invention is applied, a priority assignment system (first embodiment) that provides information in which priority for recovery measures upon the occurrence of a disaster is assigned to base stations, and a disaster-situation-specifie population provision system (second embodiment) that provides information on population by disaster situation upon the occurrence of a disaster will be described.

### [First Embodiment: Priority Assignment System]

### [Overall Structure of Priority Assignment System]

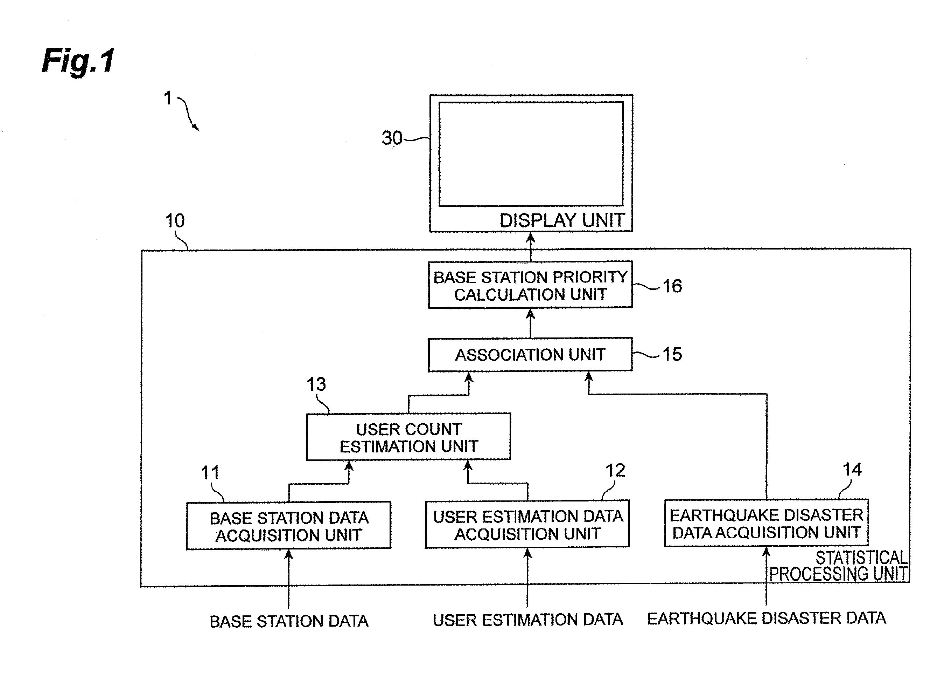

Fig. 1 is a diagram illustrating a system structure of a priority assignment system 1 according to the first embodiment. As depicted in Fig. 1, the priority assignment system 1 is configured to include a statistical processing unit 10 that uses base station data, user estimation data, and earthquake disaster data (disaster information in the claims) to calculate priority of base stations controlling mobile devices, and a display unit 30 (output unit in the claims) that displays the priority of the base stations calculated by the statistical processing unit 10, for example. Herein, the priority of the base stations is information that is assigned to each of the base stations, used for recovery measures upon the occurrence of a disaster. In addition, in the present embodiment, a case in which, as the disaster, an earthquake disaster is assumed will be described as an example.

The statistical processing unit 10 is configured to include a base station data acquisition unit 11 that acquires the base station data, a user estimation data acquisition unit 12 that acquires the user estimation data, an earthquake disaster data acquisition unit 14 (disaster information acquisition unit in the claims) that acquires the disaster data, a user count estimation unit 13 that estimates the number of users, an association unit 15 that associates the base station data with the earthquake disaster data, and a base station priority calculation unit 16 that calculates the priority of the base stations.

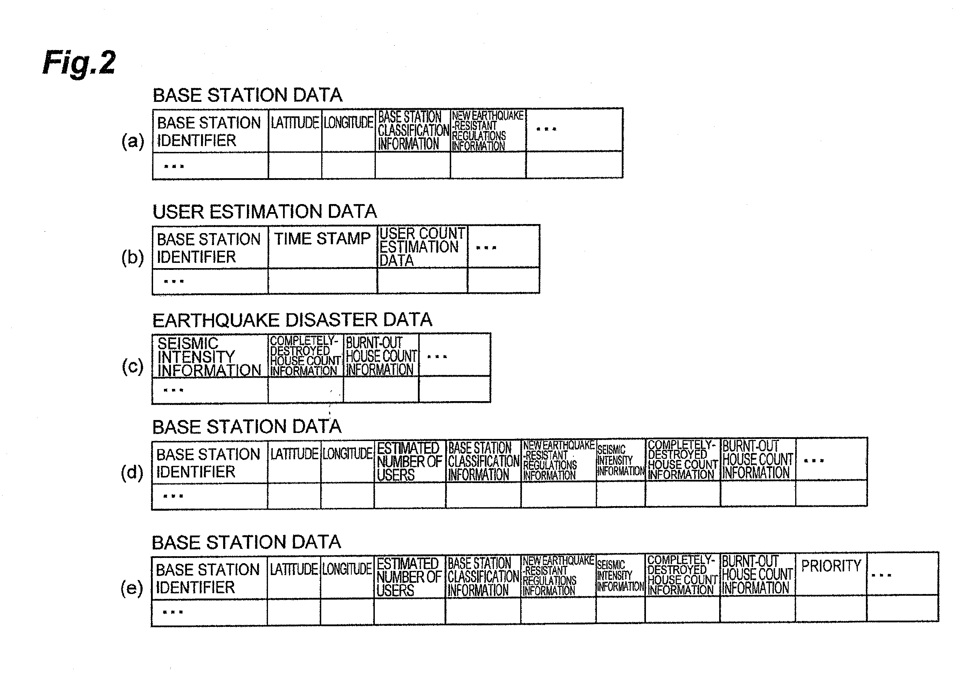

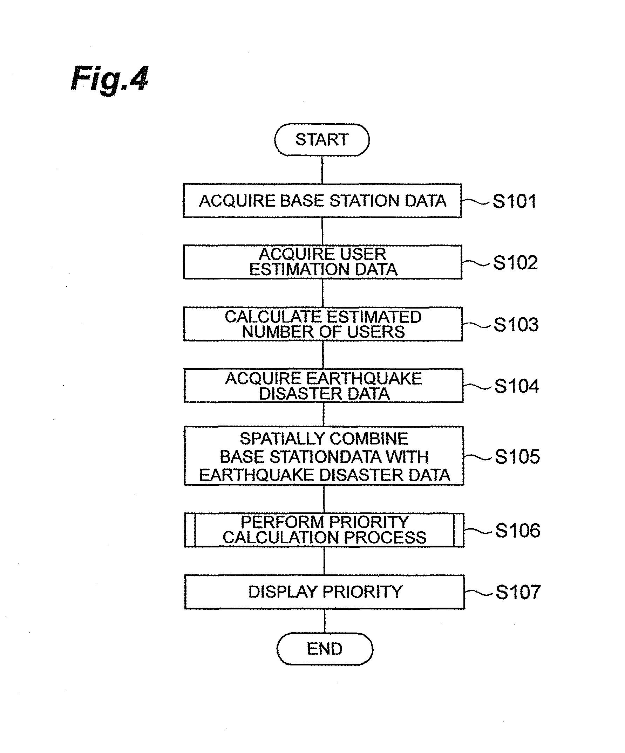

The base station data acquisition unit 11 acquires the base station data including position data of the base stations from communication systems of mobile devices not depicted. This base station data includes, as depicted in Fig. 2(a), base station identifiers, latitude, longitude, base station classification information (classification information in the claims), and new earthquake-resistant regulations information (earthquake resistance information in the claims). In the present embodiment, the base station classification information is information indicating classification of whether it is a base station installed on a roof or the like of a private building (hereinafter, referred to as a "private station") or it is a base station that a company providing a communication service using mobile devices installed on its own (hereinafter, referred to as a "company-owned station"). In addition, the new earthquake-resistant regulations information is information on whether a base station complies with a law concerning quake-resistance standards that were newly enforced or not (when it complies, earthquake resistance of the base station can be considered to be high). Note that the base station classification information and the new earthquake-resistant regulations information may be acquired as data different from the base station data including latitude and longitude by the base station data acquisition unit 11. In this case, they may be configured such that, prior to execution of a priority calculation process described later (process at step S106 in Fig. 4), the base station data including latitude and longitude is integrated with the base station classification information and the new earthquake-resistant regulations information by using base station identifiers.

The user estimation data acquisition unit 12 is a unit that acquires user estimation data that communication systems of mobile devices not depicted have. This user estimation data includes, as depicted in Fig. 2(b), base station identifiers, time stamps, and user count estimation data. The user count estimation data is data that indicates an estimated value of the number of mobile devices that are present in coverage of each of predetermined base stations at predetermined time. This user count estimation data, for each of sectors which a base station covers as a range for communication with mobile devices, by adding up the number of position registering signals transmitted from the mobile devices, and converting the added-up result into the number of unique users per unit time, can be estimated.

The user count estimation unit 13 uses the base station data that the base station data acquisition unit 11 acquires and the user estimation data that the user estimation data acquisition unit 12 acquires to determine the estimated number of users. Specifically, the user count estimation unit 13, based on the user estimation data, determines as the estimated number of users the maximum value of the number of users who are present in coverage of each of the predetermined base stations. More specifically, the maximum value of the number of the users in coverage of the predetermined base station (estimated number of users) can be obtained by adding up the number of position registering signals per unit time for each of the sectors of the base stations.

The disaster data acquisition unit 14 acquires earthquake disaster data (disaster prediction information in the claims) that a governmental agency, a municipality, or the like publishes. In the present embodiment, the earthquake disaster data is map data including information such as a disaster damage situation when an earthquake disaster occurs and, as depicted in Fig. 2(c), includes seismic intensity information, completely-destroyed house count information, and burnt-out house count information that are predicted when the earthquake occurs. In the present embodiment, it is assumed that as the earthquake disaster data, predicted values when an earthquake occurs are used, but it is not limited to this. For example, it is possible to use disaster damage information that indicates a disaster damage situation upon the actual occurrence of a disaster.

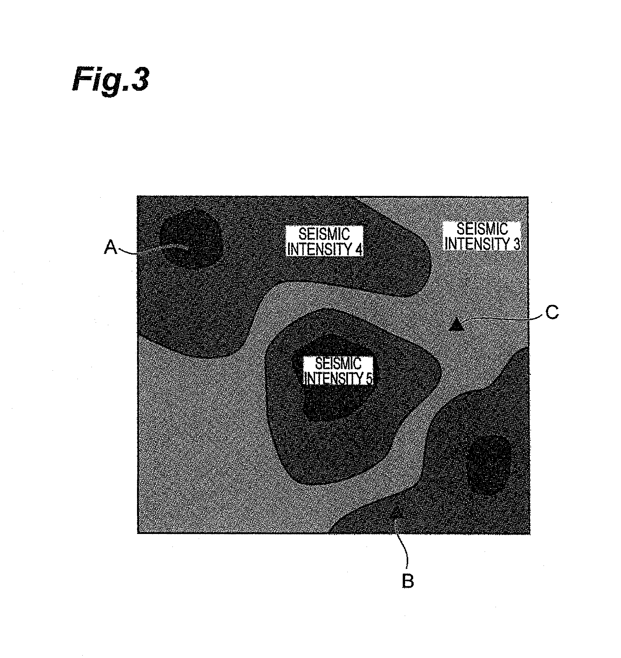

The association unit 15 associates the base station data with the earthquake data and, as depicted in Fig. 3, performs a spatially-combining process so that positions of the base stations can be displayed in an overlapped manner on the map of the earthquake disaster. Furthermore, the association unit 15 adds the estimated number of users to the base station data and the earthquake disaster data thus associated, and prepares new base station data depicted in Fig. 2(d).

The base station priority calculation unit 16, based on the base station data that the association unit 15 has prepared, for each of the base stations, calculates priority thereof for recovery measures upon the occurrence of a disaster. The base station priority calculation unit 16 adds the priority thus calculated to the base station data that the association unit 15 has prepared and prepares new base station data (Fig. 2(e)) including the priority. Furthermore, the base station priority calculation unit 16 adds information on the priority calculated to the map that association unit 15 has prepared by performing the spatially-combining process, and outputs the resulting map on the display unit 30.

In this manner, on the display unit 30, the map in which the priority of the base stations can be checked is displayed.

Note that it goes without saying that the statistical processing unit 10, although illustration is omitted, has a basic structure of a conventional information processing device (i.e., a CPU, a RAM, a ROM, an input device for inputting information, commands, or the like, a communication device for communicating with the outside, a storage device for storing information, and the like).

### [Priority Calculation Process]

Subsequently, a flow of a calculation process for priority of base stations that the statistical processing unit 10 performs will be described. Fig. 4 is a flowchart illustrating a flow of the priority calculation process. At step S101, the base station data acquisition unit 11 acquires base station data from communication systems of mobile devices. At step S102, the user estimation data acquisition unit 12 acquires user estimation data from the communication systems of the mobile devices. At step S103, the user count estimation unit 13 uses the base station data and the user estimation data to determine the estimated number of users.

Next, at step S104, the earthquake disaster data acquisition unit 14 acquires seismic intensity information, completely-destroyed house count information, and burnt-out house count information as earthquake disaster data. At step S105, the association unit 15 associates the base station data with the earthquake disaster data and performs a spatially-combining process so that positions of the base station can be displayed in an overlapped manner on a map of the earthquake disaster data. Furthermore, the association unit 15 adds the estimated number of users to the base station data and the earthquake disaster data thus associated, and prepares new base station data.

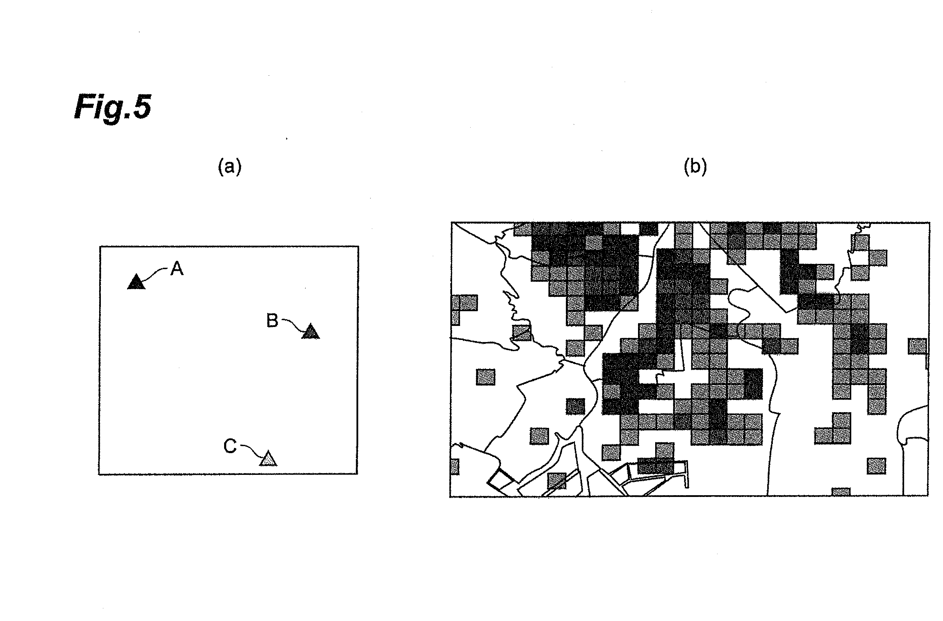

At step S106, the base station priority calculation unit 16, for each of the base stations, calculates priority thereof for recovery measures upon the occurrence of a disaster. Details of the priority calculation process will be described later. At step S107, the base station priority calculation unit 16 adds information on the priority thus calculated to the map that the association unit 15 has prepared by performing the spatially-combining process, and causes the display unit 30 to display the resulting map. Note that as for this displaying, it is acceptable to, as depicted in Fig. 5(a) for example, display base stations A, B, and C on the map, and indicate the priority by color depth in the displaying the base stations. In this case, for example, a base station whose display color is dark is assumed to have higher priority than a base station whose display color is light. Alternatively, as another example of the displaying, it is acceptable to, as depicted in Fig. 5(b), display mesh data indicating the priority of the base stations in an overlapped manner on the map. In this case, it is assumed that, in an area where color of the mesh data is dark, base stations with high priority are concentrated.

### [Details of Priority Calculation Process]

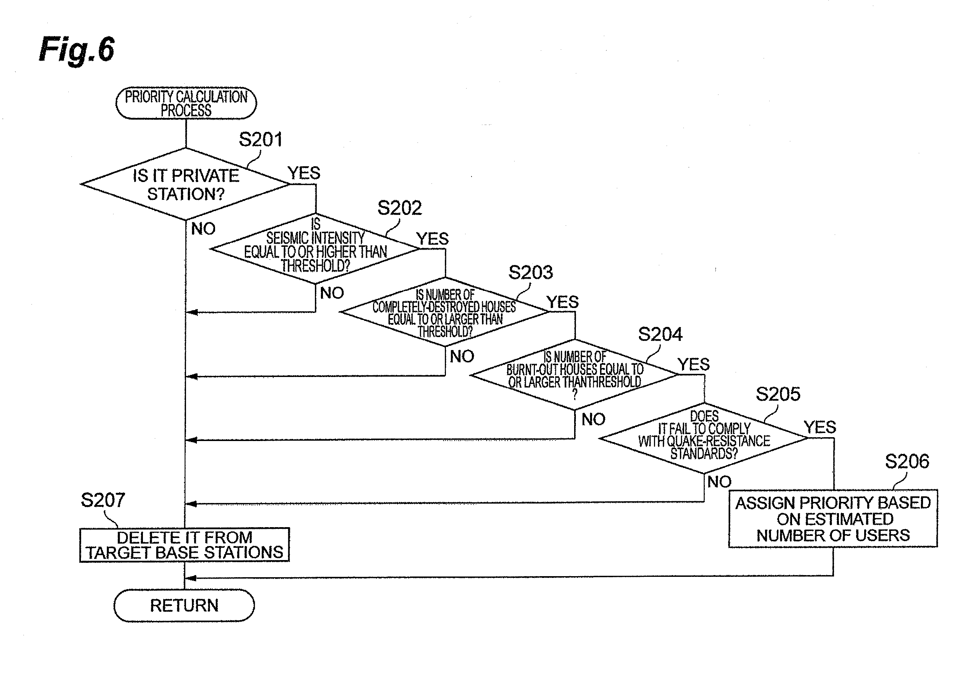

Subsequently, details of a priority calculation process that the base station priority calculation unit 16 performs will be described. Fig. 6 is a flowchart illustrating a flow of the priority calculation process. The base station priority calculation unit 16 refers to the base station data (Fig. 2(d)) that the association unit 15 has prepared, calculates priority for each of base stations identified by base station identifiers, and assigns the priority thus calculated to the respective base stations.

To begin with, at step S201, the base station priority calculation unit 16 refers to the base station classification information of the base station data (Fig. 2(d)), and determines whether each of the base stations priority of which is to be calculated is a private station or not. When it is not a private station (NO at step S201), the flow proceeds to step S207. On the other hand, when it is a private station (YES at step S201), the flow proceeds to step S202. Herein, company-owned stations are installed using a structure highly resistant to an earthquake, a fire, and the like in advance. Therefore, the company-owned stations are more resistant to disasters than private stations, and thus can be excluded from stations to which priority is to be assigned for recovery measures.

At step S202, the base station priority calculation unit 16 refers to the seismic intensity information of the base station data (Fig. 2(d)), and determines whether predicted seismic intensity is equal to or higher than a predetermined threshold or not. If the predicted seismic intensity is equal to or higher than the threshold (YES at step S202), the flow proceeds to step S203 and, if not (NO at step S202), the flow proceeds to step S207.

At step S203, the base station priority calculation unit 16 refers to the completely-destroyed house count information of the base station data (Fig. 2(d)), and determines whether the predicted number of completely-destroyed houses is equal to or larger than a predetermined threshold or not. If the predicted number of the completely-destroyed houses is equal to or larger than the threshold (YES at step S203), the flow proceeds to step S204 and, if not (NO at step S203), the flow proceeds to step S207.

At step S204, the base station priority calculation unit 16 refers to the burnt-out house count information of the base station data (Fig. 2(d)), and determines whether the predicted number of burnt-out houses is equal to or larger than a predetermined threshold or not. If the predicted number of the burnt-out houses is equal to or larger than the threshold (YES at step S204), the flow proceeds to step S205 and, if not (NO at step S024), the flow proceeds to step S207.

At step S205, the base station priority calculation unit 16 refers to the new earthquake-resistant regulations information of the base station data (Fig. 2(d)), and determines whether each of predetermined base stations is a base station that fails to comply with the quake-resistance standards newly enforced or not. If it is a base station failing to comply with the quake-resistance standards (YES at step S205), the flow proceeds to step S206 and, if not (NO at step S205), the flow proceeds to step S207.

At step S206, the base station priority calculation unit 16, for each of base stations for which YES is determined at steps S201 to S205, refers to the estimated number of users of the base station data (Fig. 2(d)), and calculates priority on the basis of the estimated number of the users. Herein, when the estimated number of the users is large, it is assumed be a base station with high priority for recovery measures, and high priority is calculated. After the calculation of priority, the base station priority calculation unit 16 adds the priority thus calculated to the base station data (Fig. 2(d)) that the association unit 15 has prepared, and prepares new base station data (Fig. 2(e)) including the priority.

At step S207, the base station priority calculation unit 16 excludes base stations for which NO is determined at steps S201 to S205 from base stations for which priority is to be calculated.

Note that the priority calculation process described with reference to Fig. 6 is performed for all of the base stations for which priority is to be calculated and, after the priority calculation process for all of the base stations is completed, the flow returns to the above-described priority display process (step S 107 in Fig. 2).

As described above, in the priority calculation process, based on the base station classification information and the earthquake disaster data (the seismic intensity information, the completely-destroyed house count information, and the burnt-out house count information), whether priority is to be calculated or not is determined. Then, to base stations for which priority is to be calculated, it is possible to assign priority on the basis of the estimated number of users.

### [Functions and Effects]

Subsequently, functions and effects of the priority assignment system 1 according to the present embodiment will be described.

According to the first embodiment described above, the association unit 15 associates earthquake disaster data that a governmental agency, a municipality, or the like publishes with base station data (Fig. 2(a)) including position information of base stations. The base station priority calculation unit 16, based on the result associated by the association unit 15 and the estimated number of users present in coverage of the base stations, assigns priority of the base stations for recovery measures at the time of a disaster. In this manner, it becomes possible to, on the basis of information based on the number of users of mobile devices and the disaster data published, accurately assign the priority of the base stations.

In addition, it becomes possible to, based on base station classification information indicating whether a base station is a private station or a company-owned station and earthquake resistance information indicating the earthquake resistance status of base stations, accurately calculate the priority of the base stations.

By using earthquake disaster data indicating predicted values of a disaster damage situation upon the occurrence of an earthquake disaster, even under a condition in which no disaster occurs, it is possible to assign priority for recovery measures upon the occurrence of an earthquake disaster to each of the base stations. In addition, under a condition in which a disaster actually occurs, by using actual disaster damage information, it is possible to assign priority for recovery measures based on actual disaster damage situation to each of the base stations.

Note that the present invention is not limited to the above-described first embodiment.

For example, as another example for calculating priority of base stations, it is possible to substitute values such as the estimated number of users, base station classification information, and seismic intensity information included in Fig. 2(d) into a calculation formula for priority calculation using these values as variables to obtain priority as numerical values.

In addition, the above-described first embodiment has been described for a case in which earthquake disaster information is used as disaster information as an example, but other than this, it is possible to use flood disaster information or typhoon information, for example.

### [Second Embodiment: Disaster-Situation-Specific Population Provision System]

### [Overall Structure of Disaster-Situation-Specific Population Provision System]

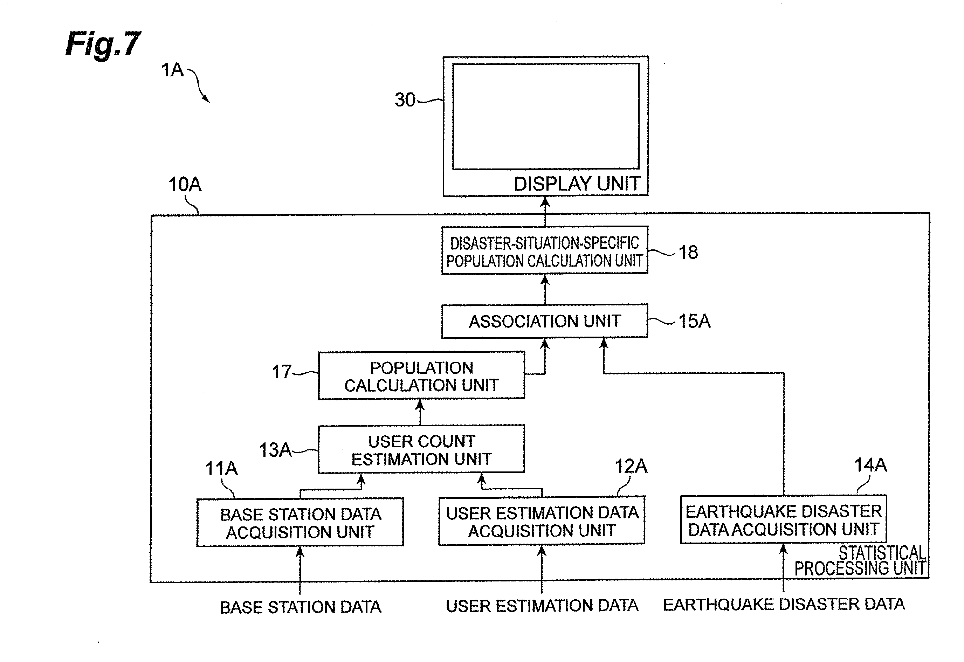

Fig. 7 is a diagram illustrating a system structure of a disaster-situation-specific population provision system 1A according to a second embodiment. As depicted in Fig. 7, this disaster-situation-specific population provision system 1A is configured to include a statistical processing unit 10A that calculates population by disaster situation upon the occurrence of a disaster using base station data, user estimation data, and disaster data (disaster information in the claims), and a display unit 30 (display unit in the claims) that displays the population by disaster situation and the like, calculated by the statistical processing unit 10A, upon the occurrence of a disaster. Furthermore, in the present embodiment, a case in which, as the disaster, an earthquake disaster is assumed will be described as an example. It is also assumed that, as the population by disaster situation, population by seismic intensity is calculated.

The statistical processing unit 10A is configured to include a base station data acquisition unit 11A that acquires the base station data, a user estimation data acquisition unit 12A that acquires the user estimation data, an earthquake disaster data acquisition unit 14A (disaster information acquisition unit in the claims) that acquires the earthquake disaster data, user count estimation unit 13A that estimates the number of users, a population calculation unit 17 that calculates population from the number of the users thus estimated, an association unit 15A that associates the population thus calculated with the earthquake disaster data, and disaster-situation-specific population calculation unit 18 that calculates population by seismic intensity.

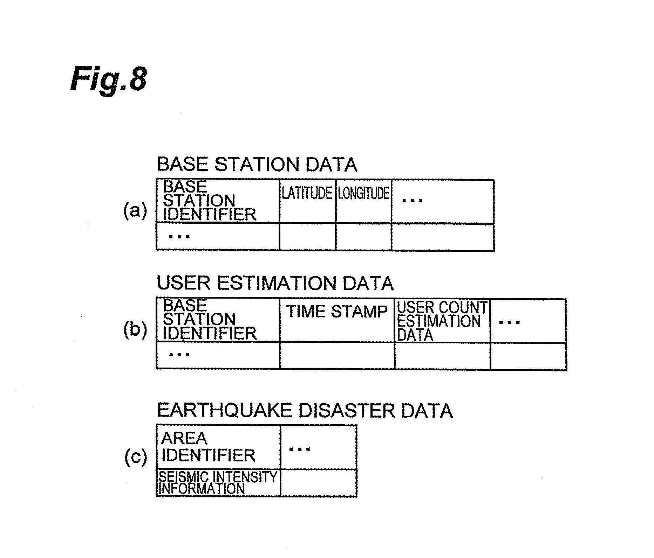

The base station data acquisition unit 11A acquires the base station data including position information of base stations from communication systems of mobile devices not depicted. This base station data includes, as depicted in Fig. 8(a), base station identifiers, latitude, and longitude. Note that in the present embodiment, it is desired to use sector data whose spatial granularity is small instead of the base station data. A region that a certain base station covers as a range for communication with mobile devices is referred as a sector. In this case, the sector data includes sector identifiers, latitude and longitude of centroids of sectors.

The user estimation data acquisition unit 12A is a unit that acquires user estimation data that communication systems of mobile devices not depicted have. This user estimation data, as depicted in Fig. 8(b), includes base station identifiers, time stamps, and user count estimation data. The user count estimation data is data that indicates an estimated value of the number of mobile devices that are present in coverage of each of predetermined base stations at predetermined time. This user count estimation data, for each of sectors that the base stations cover as communication ranges with mobile devices, by adding up the number of position registering signals transmitted from the mobile devices, and converting the added-up result into the number of unique users per unit time, can be estimated.

The user count estimation unit 13A uses the base station data that the base station data acquisition unit 11A acquires and the user estimation data that the user estimation data acquisition unit 12A acquires to estimate the number of users who are present in coverage of each of the base stations at each time of day (every hour in the present embodiment).

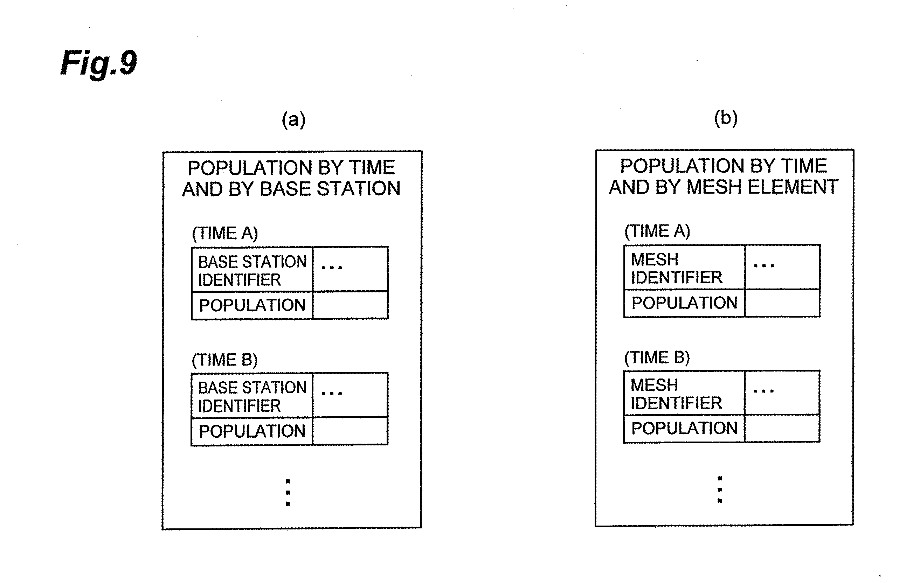

The population calculation unit 17, based on the number of users estimated by the user count estimation unit 13A at each time of day for each of the base stations, calculates population by time and by base station. More specifically, the population calculation unit 17, as depicted in Fig. 9(a), associating the base station identifiers with population in coverage of the respective base stations thereof at each time of day, calculates the population by time and by base station. Herein, the population calculation unit 17, based on age information of users of mobile devices and population conversion coefficient (as one example, the inverse of a market share of the mobile devices), for example, estimates actual population being within relevant areas from the number of the users of the mobile devices. For example, with respect to the number of young-generation users among the number of users for each of the base stations, because mobile device ownership rate among young generation is high, the number of the young-generation users is considered to be close to the actual population thereof. In contrast, with respect to the number of elderly users among the number of users for each of the base stations, because mobile device ownership rate among elderly generation is low, there is a method in which a value obtained from multiplying the number of the elderly-generation users by a predetermined coefficient is considered to be the actual population, for example. Note that with respect to the method for calculating the actual population from the number of the users of the mobile devices, any appropriate method can be used.

Note that in the base station data, sector boundary information for each sector is assumed to be included.

In addition, the population calculation unit 17 combines a sector diagram that is reproduced based on the sector boundary information for each sector included in the base station data and a two-dimensional mesh (predetermined areas in the claims) that is reproduced based on a predetermined area-dividing rule, and calculates population being present in each element of the mesh at each time of day. This procedure for calculating the population in each element of the mesh at each time of day will be described later in detail. Accordingly, by the population calculation unit 17, as depicted in Fig. 9(b), it is possible to obtain population by time and by mesh element, for which each of mesh identifiers is associated with population in the corresponding element of the mesh at each time of day.

The earthquake disaster data acquisition unit 14A acquires disaster data (disaster prediction information in the claims) that a governmental agency, a municipality, or the like publishes. In the present embodiment, the disaster data is map data including information such as a disaster damage situation when an earthquake disaster occurs and, as depicted in Fig. 8(c), includes information in which an area identifier is associated with seismic intensity information for each of predetermined areas. In the present embodiment, it is assumed that as the earthquake disaster data, predicted values when an earthquake occurs are used, but it is not limited to this. For example, it is possible to use disaster damage information that indicates a disaster damage situation upon the actual occurrence of a disaster. Note that the predetermined areas in the disaster data can be associated with elements of the mesh used by the population calculation unit 17. For example, one area in the earthquake disaster data corresponds to a plurality of elements of the mesh used by the population calculation unit 17.

The association unit 15A associates the population by mesh element that the population calculation unit 17 calculates with the earthquake disaster data at each time of day. More specifically, the association unit 15A performs a spatially-combining process so that the population by mesh element can be displayed in an overlapped manner on the map of the earthquake disaster data.

The disaster-situation-specific population calculation unit 18, based on the association result by the association unit 15A, calculates population by disaster situation. More specifically, at each time of day, population being present in areas indicating predetermined seismic intensities is added up for each of the seismic intensities. Furthermore, the disaster-situation-specific population calculation unit 18 prepares data for visualizing the added-up result, specifically graph data. The disaster-situation-specific population calculation unit 18 outputs the map that the association unit 15A has prepared by performing the spatially-combining process and the graph data on the display unit 30.

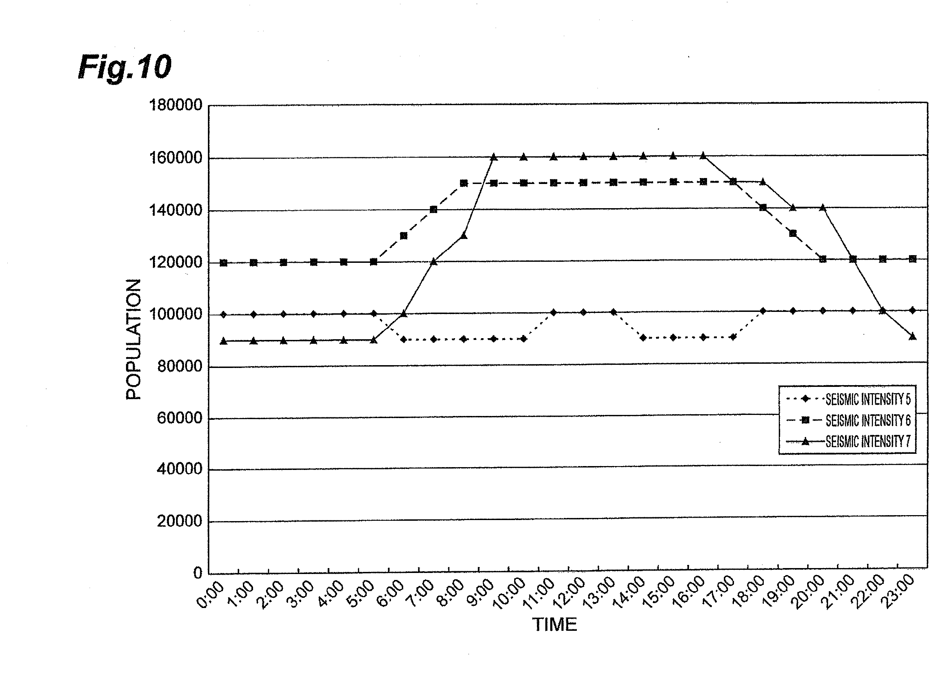

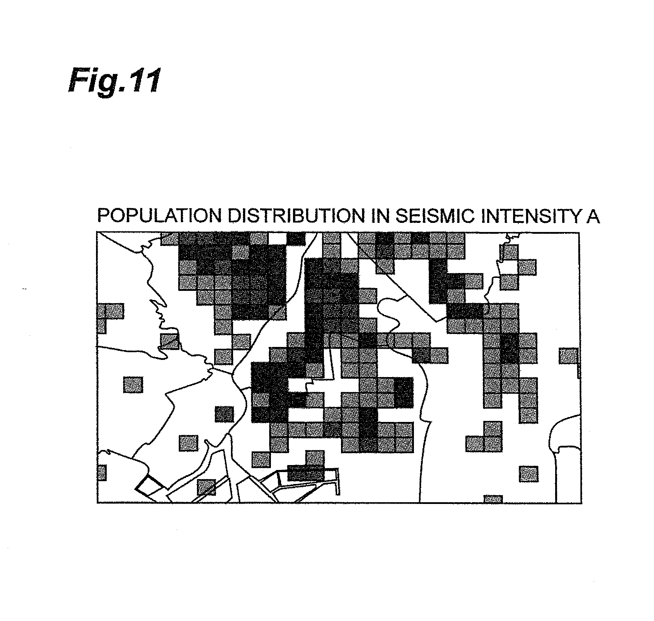

In this manner, on the display unit 30, as depicted in Fig. 10, a graph in which population at each time of day is indicated for each of the seismic intensities and, as depicted in Fig. 11, a map in which population distribution for each element of the mesh is indicated are displayed. Note that in Fig. 11, only population in mesh elements corresponding to a seismic intensity A is displayed, and parts having a mesh element whose color is dark indicate areas in which population is large. In addition, in Fig. 11, white parts (parts without shading) indicate areas in which seismic intensity is other than A.

Note that it goes without saying that the statistical processing unit 10A, although illustration is omitted, has a basic structure of a conventional information processing device (i.e., a CPU, a RAM, a ROM, an input device for inputting information, commands, or the like, a communication device for communicating with the outside, a storage device for storing information, and the like).

### [Disaster-Situation-Specific Population Calculation Process]

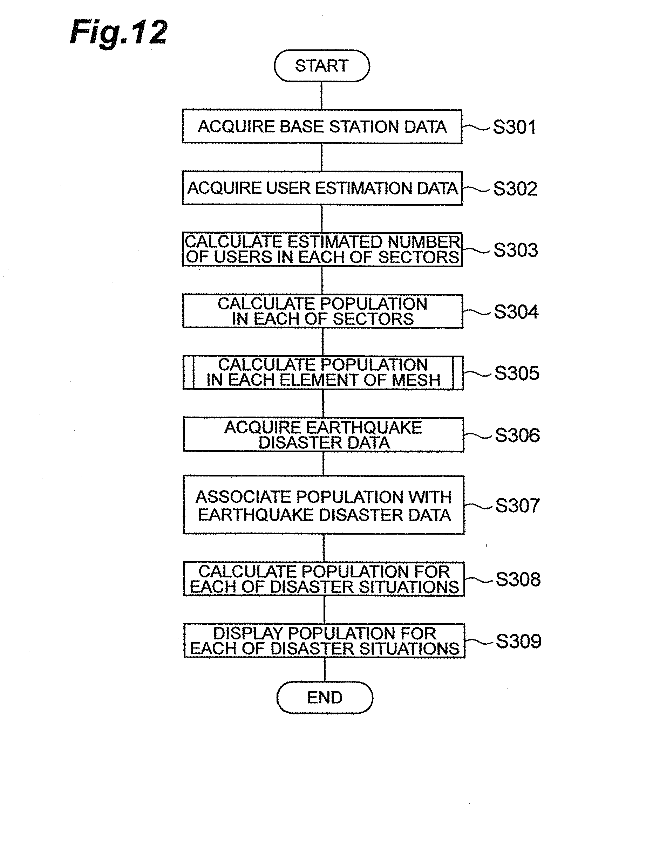

Subsequently, a flow of a population calculation process for each of disaster situations that the statistical processing unit 10A performs will be described. Fig. 12 is a flowchart illustrating the flow of the population calculation process for each of the disaster situations. At step S301, the base station data acquisition unit 11A acquires base station data from communication systems of mobile devices. At step S302, the user estimation data acquisition unit 12A acquires user estimation data from communication systems of mobile devices. At step S303, the user count estimation unit 13A uses the base station data and the user estimation data to determine the estimated number of users in each of sectors.

Next, at step S0304, the population calculation unit 17 calculates population in each of the sectors. At step S305, the population calculation unit 17, based on the population in each of the sectors, calculates population in each element of the mesh. Details of the present process will be described later.

At step S306, the earthquake disaster data acquisition unit 14A acquires, as disaster data, information in which an area identifier is associated with seismic intensity information for each of the predetermined areas. At step S307, the association unit 15A associates the population in each element of the mesh with the earthquake disaster data for each time of day.

At step S308, the disaster-situation-specific population calculation unit 18, based on the association result by the association unit 15A, calculates population for each of the disaster situations at each time of day. Furthermore, the disaster-situation-specific population calculation unit 18 prepares graph data for visualizing summarized results thereof.

At step S309, the disaster-situation-specific population calculation unit 18 causes the display unit 30 to display the map (Fig. 11) that the association unit 15A has prepared by performing the spatially-combining process and the graph data (Fig. 10). Note that with respect to this displaying, it is acceptable to display the map and the graph data at the same time, and it is also acceptable to make them displayable in a switching manner between the two.

### [Details of Population Calculation Process for Each Element of Mesh]

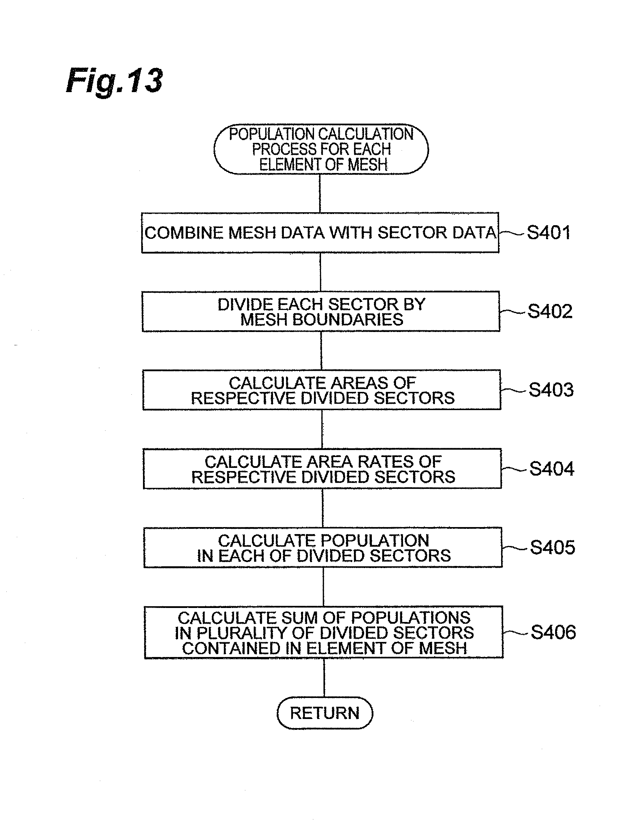

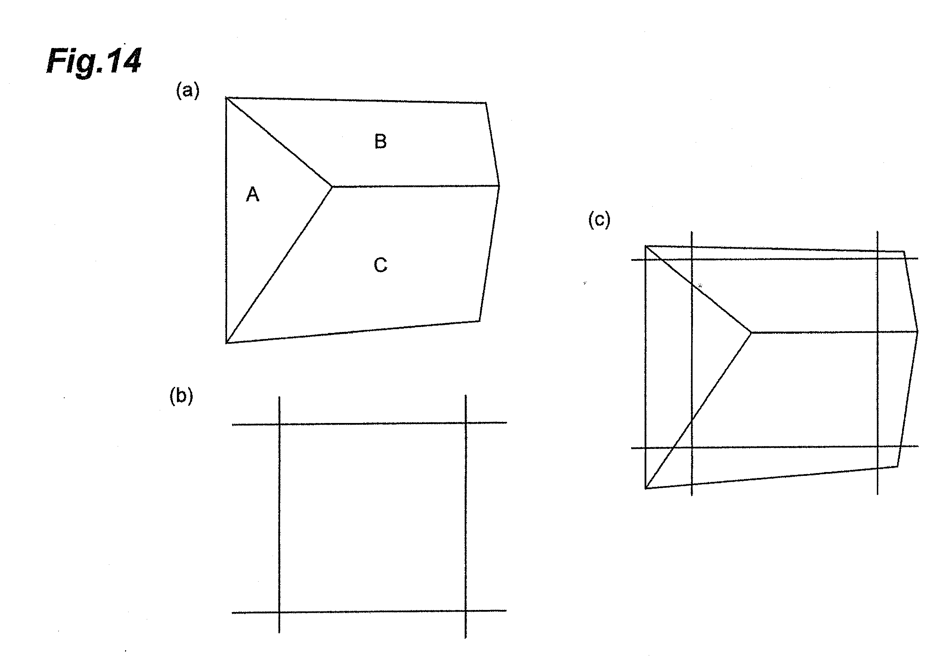

Subsequently, details of a process for the population calculation unit 17 to calculate population in each element of the mesh from the population in each of the sectors (step S305 in Fig. 12) will be described. Fig. 13 is a flowchart illustrating a flow of the population calculation process for each element of the mesh. To begin with, at step S401, the population calculation unit 17 combines the sector diagram (see Fig. 14(a)) reproduced based on the sector boundary information for each sector that the base station data acquisition unit 11A has acquired and the two-dimensional mesh (see Fig. 14(b)) reproduced based on the predetermined area-dividing rule to obtain a composite diagram as depicted in Fig. 14(c).

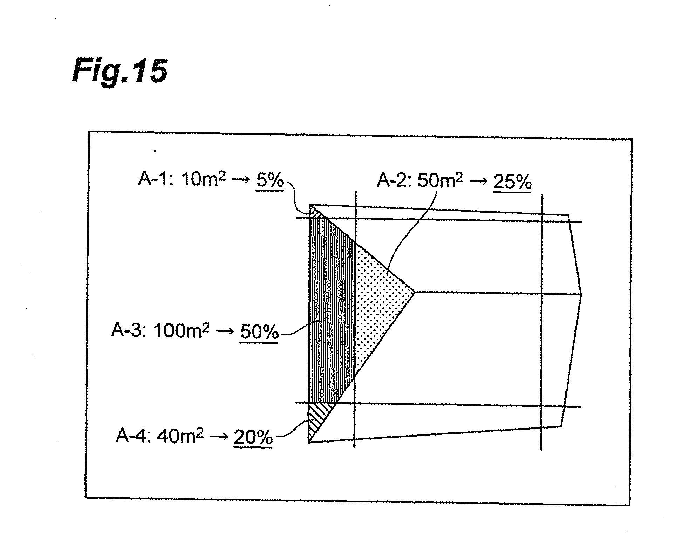

Next, at step S402, the population calculation unit 17 divides each sector by mesh boundaries in the above-mentioned composite diagram. For example, as depicted in Fig. 15, a sector A in the Fig. 14(a) is divided into four divided sectors A-1, A-2, A-3, and A-4 by the mesh boundaries. Then, at step S403, the population calculation unit 17 calculates areas of the respective divided sectors and, at step S404, calculates the area rates of the respective divided sectors. For example, as depicted in Fig. 15, in the case that areas of the divided sectors A-1, A-2, A-3, and A-4 are respectively calculated to be 10 m², 50 m², 100 m², and 40 m², area rates (percentage for example) of the divided sectors A-1, A-2, A-3, and A-4 are calculated to be 5%, 25%, 50%, and 20%.

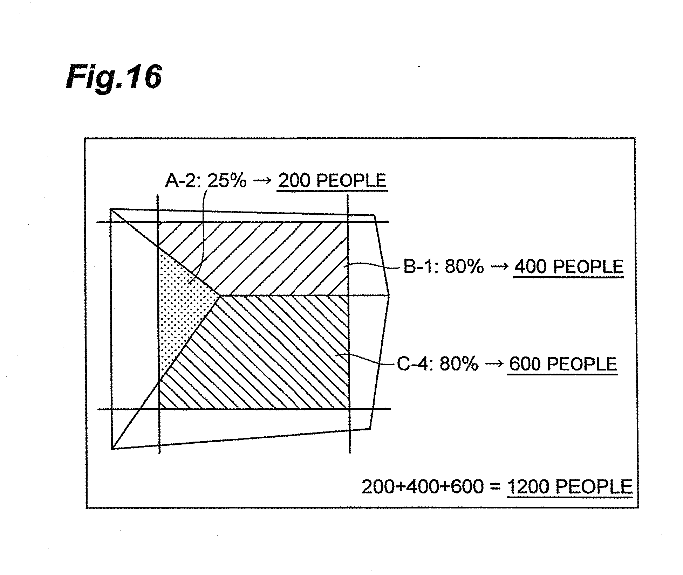

Next, at step S405, the population calculation unit 17 calculate population in each of the divided sectors. For example, when a population in the sector A in Fig. 14(a) is assumed to be 800 people, a population in the divided sector A-2 is calculated to be 200 people (i.e., 800 people×25%) as depicted in Fig. 16. In the same manner, when populations in sectors B and C are respectively assumed to be 500 people and 750 people, a population in the divided sector B-1 having an area rate of 80% in the sector B is calculated to be 400 people (i.e., 500 people×80%), and a population in the divided sector C-4 having an area rate of 80% in the sector C is calculated to be 600 people (i.e., 750 people×80%).

Next, at step S406, the population calculation unit 17, by calculating the sum of the populations in a plurality of divided sectors contained in one element of the mesh, calculates population of the element of the mesh. In an example of Fig. 16, the sum of the populations in the divided sectors A-2, B-1, and C-4 contained in the one element of the mesh is calculated to be 1200 people (i.e., 200 people+400 people+600 people), and this population of 1200 people is assumed to be the population in the element of the mesh. In the above-described manner, it is possible to calculate population in each element of the mesh from population in each of the sectors.

As described in the foregoing, in the population calculation process for each of the disaster situations, by associating the population in each element of the mesh calculated at each time of day with the earthquake disaster data, it is possible to calculate population for each of the disaster situations at each time of day. In addition, it is possible to prepare graph data for visualizing these calculation results.

### [Functions and Effects]

Subsequently, functions and effects of the disaster-situation-specific population provision system 1A according to the present embodiment will be described.

According to the second embodiment described above, the user count estimation unit 13A estimates the number of users of mobile devices in each of sectors at predetermined time intervals. Based on the estimated number of the users in each of the sectors, the population calculation unit 17 calculates population in the sectors at the predetermined time intervals, and further calculates population in elements of a mesh at the predetermined time intervals. The association unit 15A associates earthquake disaster data that indicates an earthquake disaster situation in each of predetermined areas acquired by the earthquake disaster data acquisition unit 14A with the population in the elements of the mesh that the population calculation unit 17 has calculated at the predetermined time intervals. The disaster-situation-specific population calculation unit 18, based on the association result by the association unit 15A, calculates population for each of disaster situations. The display unit 30 displays the population for each of the disaster situations calculated by the disaster-situation-specific population calculation unit 18. In this manner, on the basis of information based on the number of users of mobile devices and the earthquake disaster data published, it is possible to accurately calculate the population for each of the disaster situations.

Note that the present invention is not limited to the second embodiment described above.

For example, the second embodiment has been described for a case in which earthquake disaster information is used as disaster information as an example, but other than this, it is possible to use flood disaster information or typhoon information, for example. For example, when using flood disaster information as disaster information, for each degree of submergence of houses, it is possible to calculate population at each predetermined time.

### Reference Signs List

1... priority assignment system, 1A... disaster-situation-specific population provision system, 11, 11A... base station data acquisition unit, 12, 12A... user estimation data acquisition unit, 13, 13A... user count estimation unit, 14, 14A... earthquake disaster data acquisition unit, 15, 15A... association unit, 16... base station priority calculation unit, 17... population calculation unit, 18... disaster-situation-specific population calculation unit, 30... display unit

## Claims

1. A disaster information provision system comprising:
a base station data acquisition unit that acquires base station data including position information of base stations that control communication between mobile devices;
a disaster information acquisition unit that acquires disaster information;
an association unit that associates the base station data acquired by the base station data acquisition unit with the disaster information acquired by the disaster information acquisition unit;
a user count estimation unit that estimates the number of users of the mobile devices that the base stations control;
a base station priority calculation unit that, based on an association result by the association unit and the number of the users, calculates priority of the base stations in accordance with a predetermined condition specified in advance; and
an output unit that outputs the priority calculated by the base station priority calculation unit.

2. The disaster information provision system according to claim 1, wherein the base station data includes, in addition to the position information, at least one of classification information of the base stations and earthquake resistance information of the base stations.

3. A disaster information provision system comprising:
a disaster information acquisition unit that acquires disaster information indicating a disaster situation for each of predetermined areas;
a user count estimation unit that estimates the number of users of mobile devices that base stations controlling communication between the mobile devices control at predetermined time intervals;
a population calculation unit that calculates population for each of the predetermined areas from the estimated number of users that the user count estimation unit estimates;
an association unit that associates the population that the population calculation unit calculates with the disaster information acquired by the disaster information acquisition unit;
a disaster-situation-specific population calculation unit that, based on an association result by the association unit, calculates population by disaster situation; and
an output unit that outputs the population by disaster situation calculated by the disaster-situation-specific population calculation unit.

4. The disaster information provision system according to any one of claims 1 to 3, wherein the disaster information is disaster prediction information on a predicted situation upon occurrence of a disaster, or disaster damage information that indicates a disaster damage situation upon actual occurrence of a disaster.

5. A disaster information provision method executed by a disaster information provision system, the disaster information provision method comprising:
a base station data acquisition step of acquiring base station data including position information of base stations that control communication between mobile devices;
a disaster information acquisition step of acquiring disaster information;
an association step of associating the base station data acquired at the base station data acquisition step with the disaster information acquired at the disaster information acquisition step;
a user count estimation step of estimating the number of users of the mobile devices that the base stations control;
a base station priority calculation step of, based on an association result at the association step and the number of the users, calculating priority of the base stations in accordance with a predetermined condition specified in advance; and
an output step of outputting the priority calculated at the base station priority calculation step.

6. A disaster information provision method executed by a disaster information provision system, the disaster information provision method comprising:
a disaster information acquisition step of acquiring disaster information that indicates a disaster situation for each of predetermined areas;
a user count estimation step of estimating at predetermined time intervals the number of users of mobile devices that base stations controlling communication between the mobile devices control;
a population calculation step of calculating population for each of the predetermined areas from the number of the users estimated at the user count estimation step;
an association step of associating the population calculated at the population calculation step with the disaster information acquired at the disaster information acquisition step;
a disaster-situation-specific population calculation step of, based on an association result at the association step, calculating population by disaster situation; and
an output step of outputting the population by disaster situation calculated at the disaster-situation-specific population calculation step.
